# EUROPEAN PATENT APPLICATION

(11) **EP 3 981 298 A1**
(43) Date of publication of application: **13.04.2022**
(21) Application number: 20200441.2
(22) Date of filing: 07.10.2020
(51) Int. Cl.: A47J 31/54

(54) **ELECTRICAL HEATING DEVICE FOR USE IN A BEVERAGE PREPARATION MACHINE AND BEVERAGE PREPARATION MACHINE COMPRISING THIS HEATING DEVICE**

(71) Applicant: Société des Produits Nestlé S.A., 1800 Vevey (CH)
(72) Inventor: ROGNON, Vincent, 1350 Orbe (CH)

(57) **Abstract**

An electrical heating device (1) for use in a beverage preparation machine comprising: a body (2) having a longitudinal axis (L), wherein said body (2) comprises: at least a heating tube (4) at least partially embedded in said body (2), wherein a fluid to be heated flows in said heating tube (4), said heating tube (4) comprising an inlet portion (5) and an outlet portion (6) for said fluid, at least one electrical resistor (3A-3H) at least partially embedded in said body (2), for heating the fluid flowing in said heating tube (4); wherein said body (2) comprises an oxide ceramic material, in particular an oxide ceramic material comprising MgO for transferring the thermal energy of said electrical resistors (3A-3H) to said heating tube (4) and wherein the heating tube (4) comprises at least five parts (4A-4D) that extend inside said body (2), wherein said at least five parts (4A-4D) comprise a central part (4A), which extends substantially coaxially to said longitudinal axis (L), and four outermost parts (4B-4D) extending substantially symmetric and parallel to said longitudinal axis (L), wherein said five parts (4A-4D) are connected in series with each other to form a single heating tube (4).

## Description

### Field of the invention

The present invention concerns an electrical heating device for use in a beverage preparation machine, according to the pre-characterizing portion of claim 1, and a beverage preparation machine comprising this heating device.

### Background of the invention

Beverage preparation machines, in particular machines which use single-use or disposable containers for preparing a beverage product by mixing a fluid substance, for example hot water, with an ingredient, for example roast and ground coffee, contained in such a single-use or disposable container, are well known.

These machines usually comprise a cold-water tank, connected through a pipe to a pump delivering the cold water to an electrical heating device. At the exit of the heating device the hot water flows through a conduit and arrives at a cartridge containing an ingredient where the beverage is prepared, then the beverage flows from the cartridge into a container - for instance a cup - for consumption.

In these well-known machines, the electrical heating devices usually comprise a thermo-block made of aluminium.

These known aluminium-made heating devices require heavy use of aluminium for their manufacturing and high amount of energy when they are produced, especially due to die-casting process which requires heating the aluminium at a very high temperature.

Moreover, this manufacturing process allows a rough accuracy of the dimensions of the end product, and this could lead to diminishing the performance of the heating device and its accuracy with regard to the temperature of the water exiting the device.

### Summary of the invention

One object of the present invention is therefore to provide an electrical heating device for use in a beverage preparation that is an alternative to the known aluminium heating devices, and which is easier to be manufactured, and reduces the amount of energy required for its manufacture process.

Another object of the present invention is to provide an electrical heating device which improves heat transfer speed and improves heating accuracy.

Another object of the present invention is to provide an electrical heating device which is easy to be manufactured and has low manufacturing costs.

Another object of the present invention is to provide a beverage preparation machine comprising an alternative heating device.

The present invention as claimed in claim 1 is thus an electrical heating device for use in a beverage preparation machine comprising:
a body having a longitudinal axis, wherein said body comprises:
at least a heating tube at least partially embedded in said body, wherein a fluid to be heated flows in said heating tube, said heating tube comprising an inlet portion and an outlet portion for said fluid,
at least one electrical resistor at least partially embedded in said body, for heating the fluid flowing in said heating tube;
wherein said body comprises an oxide ceramic material, in particular an oxide ceramic material comprising MgO, for transferring the thermal energy of said electrical resistors to said heating tube,
wherein the heating tube comprises: at least five parts that extend inside said body, comprising: a central part which extends substantially coaxially to said longitudinal axis, and four outermost parts extending substantially symmetric and parallel to said longitudinal axis, wherein said five parts are connected in series with each other to form a single heating tube.

Such heating device is advantageous in that, as it does not comprise any aluminium component, it is easy to be manufactured, the reliability of its operations and the cost of its implementation are minimal.

Moreover, as the heating tube comprises at least five part, the length of the device may be comparable to the conventional heating devices for beverage preparation machines, with comparable heating performances.

The fluid which has to be heated in the heating device is preferably a liquid and more preferably water, but may be any fluid usable for the preparation of a beverage. The generation of steam can also be considered, for example, for heating directly water in a cup or for foaming milk. The use of the heating device can be considered for small beverage preparation machines, like coffee machines, or bigger machines, like vending machines.

In a possible embodiment, the body of the heating device comprises an external hollow tube, housing the five parts of the heating tube and the at last one electrical resistor, wherein the space between the inner surface of the tube and the parts of the heating tube and the electrical resistors is at least partially filled with MgO, preferably in powder form or in an extruded form.

This is advantageous in that the device is very easy to be manufactured.

Preferably, the hollow tube is closed at its ends by side walls each having seats for end portions of the five parts of the heating tube and seats for end portions of said at least one electrical resistor, said seats being shaped, dimensioned and positioned so that they support and position the parts of the heating tube and the electrical resistor at fixed distances between each other.

This is advantageous in that it renders the manufacturing of the device even easier.

In another possible embodiment the five parts of the heating tube are connected in series by four connecting portions, provided at ends portions of said body, and preferably outside the body.

This is advantageous in that the heating tube is easier to be manufactured.

In another possible embodiment the four outermost parts of the heating tube are positioned symmetrical to each other and to the central part and at the same distance, with respect to said central part, and at the same distance to the centres of each other, and preferably the four outermost parts of the heating tube are positioned more closely to the outer wall of the body than to the longitudinal axis of this body, such that said distance with respect to said central part is greater than a quarter of the diameter of the body.

This disposition of the heating tube parts optimizes the dimensions of the heating device and the heating performances.

In particular, considering a cross section of the body, it comprises a first and a second symmetry axes of a first pair of orthogonal axes, perpendicular with each other, with their intersection point positioned along the longitudinal axis of the body, the centres of two of the four outermost tubular parts of the heating tube being positioned along said first axis, the centres of the two other outermost tubular parts being positioned along the other axis, and the centre of the of the central part being positioned at the intersection point of this first pair of orthogonal axes.

This disposition of the heating tube parts optimizes the dimensions of the heating device and the heating performances.

In another possible embodiment the heating device comprises a plurality of distinct electrical resistors at least partially embedded in the heating body, wherein said electrical resistors are rectilinear elements extending substantially from one end portion of the body to the other end portion, and preferably comprising connecting portions projecting outside from said end portions of the body for connecting the electrical resistors to conventional electrical power supply cables. Advantageously, considering a cross section of the body of the heating device, it comprises a first and a second axes of a first pair of orthogonal axes, perpendicular with each other, with their intersection point positioned along the longitudinal axis of the body. The heating device also comprises at least eight electrical resistors:
wherein four outermost electrical resistors are positioned symmetrical to each other, with two outermost electrical resistors positioned along an axis of a first pair of orthogonal axes, and two other outermost electrical resistors are positioned along the other axis, all at the same distance from the centre of this orthogonal axes,
and wherein four innermost electrical resistors are positioned symmetrical to each other, with two innermost electrical resistors positioned along an axis of a second pair of orthogonal axes, and two other innermost electrical resistors are positioned along another axis of this second pair of orthogonal axes, all at the same distance from the centre of these second pair of orthogonal axes, wherein the second pair of orthogonal axes is concentric with the first pair of orthogonal axes and is rotated with respect to the first pair of orthogonal axes of 45° clock wise.

This disposition of the electrical resistors optimizes the heating performances of the resistors in a heating device with a heating tube comprising five parts positioned in the body of the heating device as described above.

In another possible embodiment the heating device comprises at least eight electrical resistors:
wherein four outermost electrical resistors are positioned more closely to the outer wall of the body than the four outermost parts of the heating tube, such that the distances of the four outermost electrical resistors with respect to the longitudinal axis of the body is greater than the distance of the four outermost parts with respect to said longitudinal axis,
and wherein four innermost electrical resistors are positioned more closely to the longitudinal axis of the body, than to the other electrical resistors, and preferably said four innermost electrical resistors are positioned at a distance with respect to the longitudinal axis of the body that is less than the distance of the four outermost parts of the heating tube with respect to the same longitudinal axis of the body.

This disposition of the electrical resistors optimizes the heating performances of the resistors in a heating device with a heating tube comprising five parts positioned in the body of the heating device as described above.

The present invention also relates to a beverage preparation machine comprising a water circuit including: a water tank, a pump, a heating device, and an ingredient package holder, wherein, during the preparation of a hot beverage, water that is drawn from the reservoir is pressurized by the pump, then passed through the heating device and is fed through a hot water line, to said ingredient package for preparing the beverage, wherein said heating device comprises the features according to one or more of the above embodiments.

### Brief description of the drawings

Additional features and advantages of the present invention are described in, and will be apparent from, the description of the presently preferred embodiments which are set out below with reference to the drawings in which:
**Figure 1** is schematic perspective view of a preferred embodiment of an electrical heating device according to the present invention;
**Figure 2** is a schematic longitudinal sectional perspective view of the heating device of Figure 1;
**Figure 3** is a schematic transversal sectional view taken along a central sectional line of the device shown in Figure 1;
**Figures 4** **and** **5** are schematic lateral views of the device shown in Figure 1;
**Figure 6** is a schematic depiction of a beverage preparation machine comprising a heating device according to Figure 1.

### Detailed description of the invention

As used in this specification, the words "comprise", "comprising", "including" and similar words are not to be interpreted in an exclusive or exhaustive sense.

The invention is further described with reference to the following examples. It will be appreciated that the invention as claimed is not intended to be limited in any way by these examples.

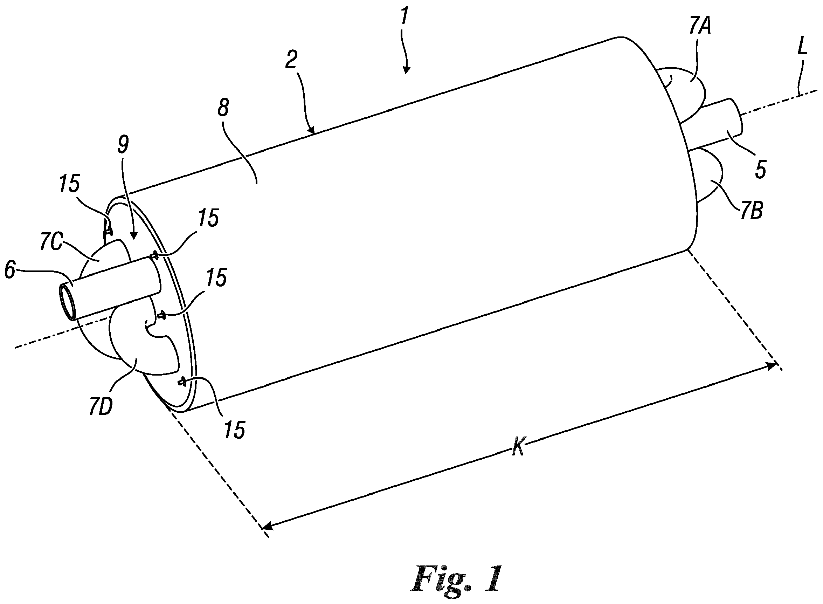

A preferred embodiment of an electrical heating device for use in a beverage preparation machine according to the present invention is illustrated in **Figures 1 to 4****.** The heating device is indicated as a whole with reference numeral 1 and comprises:
- a body 2 having a longitudinal axis L, wherein said body 2 comprises:
- at least a heating tube 4 at least partially embedded in said body 2, wherein a fluid to be heated flows in said heating tube 4, said heating tube 4 comprising an inlet portion 5 and an outlet portion 6 for said fluid,
- at least one electrical resistor 3A-3H at least partially embedded in said body 2, for heating the fluid flowing in said heating tube 4;
wherein said body 2 comprises an oxide ceramic material, in particular an oxide ceramic material comprising MgO, for transferring the thermal energy of said electrical resistors 3A-3H to said heating tube 4.

According to the invention, the heating tube 4 comprises at least five parts 4A-4D that extend inside said body 2, said five parts 4A-4D comprising: a central part 4A which extends substantially coaxially to said longitudinal axis L, and four outermost parts 4B-4D extending substantially symmetric and parallel to said longitudinal axis L, wherein said five parts 4A-4D are connected in series with each other, to form a single heating tube 4.

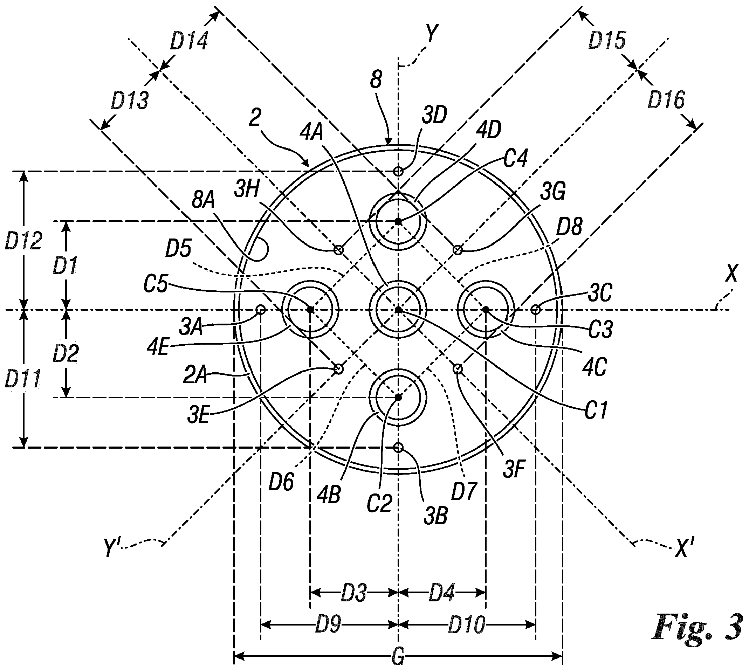

Preferably the body 2 comprises an external hollow tube 8, housing the five parts 4A-4D of the heating tube 4, and the at last one electrical resistor 3A-3H; the space between the inner surface 8a **(****Figure 3****)** of the tube 8 and the parts 4A-4D of the heating tube 4 and the electrical resistors 3A-3H is at least partially filled with MgO, preferably in powder form or in an extruded form.

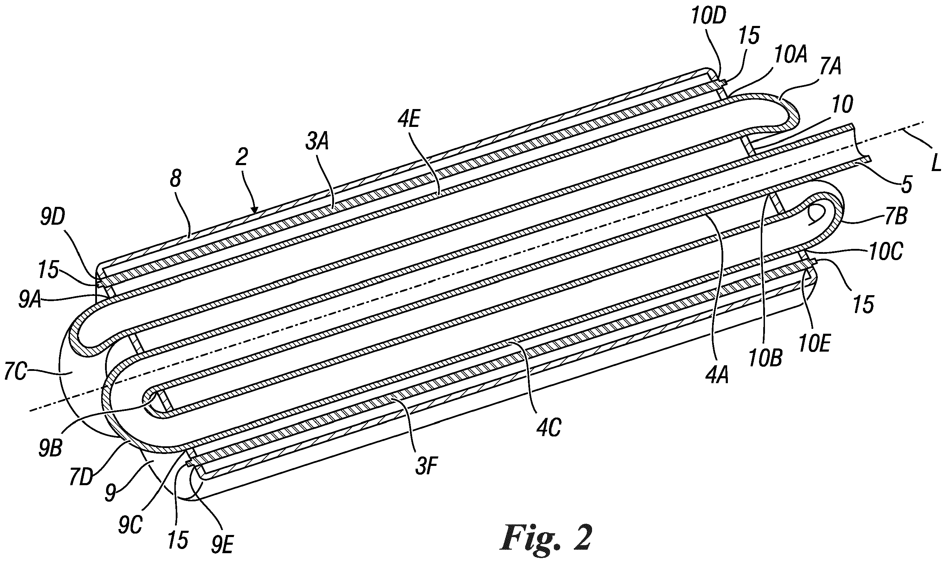

Preferably the hollow tube 8 is closed at its ends by side walls 9, 10 each having seats 9A-9C, 10A-10C for end portions of the parts 4A-4D of the heating tube and seats 9D-9E, 10D-10E (only two seats are visible in **Figure 2**) and for end portions of the electrical resistors 3A-3H. These seats are shaped, dimensioned and positioned so that they support and position the parts 4A-4D of the heating tube 4 and the electrical resistors 3A-3H in predetermined specific positions inside the body 2.

The tube 8 and the side walls 9 and 10 are made in a metal or in plastic material, and are assembled together as usual for the expert in the field.

It is to be noted that the hollow tube 8 is not essential and that the body 2 may be entirely realized in an oxide ceramic material, in particular an oxide ceramic material comprising MgO, for example by extrusion.

Preferably the body 2 has a length K comprised between 200 mm and 400 mm, and more preferably of about 300 mm, and a diameter G comprised between 12 mm and 20 mm, and more preferably about 17 mm.

The body 2 has preferably a cylindrical form with the inlet and outlet portions 5, 6 and the connecting portions 7A-7D of the heating tube 4 projecting from the side walls 9 and 10 (as shown in **Figure 1**).

The fact that the connecting portions 7A-7D are outside the body 2 renders the manufacturing of this body 2 easier as it needs to be provided only with linear holes for housing the five rectilinear parts 4A-4D of the heating tube 4.

The oxide ceramic material is advantageously a material comprising MgO, for example 80% of MgO and 20% of one or more other chemical compounds well known to the skilled person.

Preferably, according to the invention the five parts 4A-4D of the heating tube 4 are rectilinear tubular parts, extending from one side wall 9 of the body 2 to the other side wall 10.

Preferably the connecting portions 7A-7D of the five parts 4A-4D of the heating tube 4 are curvilinear parts.

Preferably, according to the invention the four outermost parts 4B-4D of the heating tube 4 are positioned symmetrical to each other and to the central part 4A and at the same distance D1-D4, with respect to said central part 4A and at the same distance D5-D8 to the centres C2-C5 of each other, these distances D1-D8 being considered with respect to the centres C1-C5 of said tubular parts 4A-4D **(****Figure 3****).**

Preferably, as shown in **Figure 3****,** the four outermost parts 4B-4D of the heating tube 4 are positioned more closely to the outer wall 2A of the body 2 than to the longitudinal axis L of this wall. Therefore, the distances D1, D2, D3, D4 are greater than a quarter of the diameter G of the body 2, that is: D1, D2, D3, D4 > G/4, wherein preferably the diameter G is comprised between 12 mm and 20 mm, and more preferably is about 17 mm.

Preferably, considering a cross section of the body 2 of the heating device 1, it comprises a first and a second axes X, Y of a first pair of orthogonal axes, perpendicular with each other **(****Figure 3****)** with their intersection point positioned along the longitudinal axis L of the body 2. The centres C3, C5 of two 4C, 4E of the four outermost tubular parts 4B-4D of the heating tube 4 are positioned along the first axis X, whereas the centres C2, C4 of the two other 4B, 4D tubular parts are positioned along the other axis Y, and the centre C1 of the of the central part 4A is positioned at the intersection point of these axes X, Y.

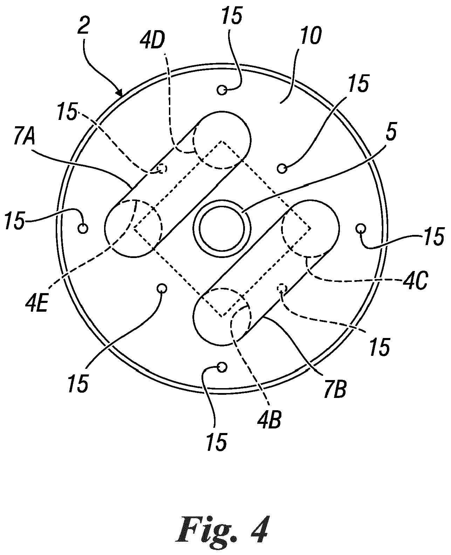

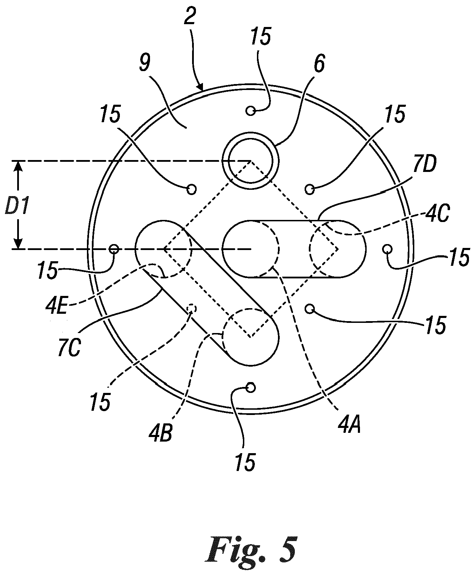

Preferably, as shown in **Figures 4** **and** **5****,** the inlet and outlet portions 5, 6 are one coaxial with the longitudinal axis L of the body 2 and the other at a distance D1 from this axis L, and the curvilinear portions 7A and 7B provided at side 10 of the body 2 **(****Figure 4****)** connect to each other, respectively: the parts 4D and 4E and 4B and 4C of the heating tube 4, but not also the part 4A whose projection forms the inlet part 5 of the heating tube 4. The curvilinear portions 7C and 7D provided at side 9 of the body 2 **(****Figure 5****)** connect to each other, respectively: the parts 4E and 4B and 4C and 4A of the heating tube 4, but not also the part 4D whose projection forms the outlet part 6 of the heating tube 4.

Preferably, the curvilinear portions 7A, 7B and 7C have the same curved shape and dimensions, while the curvilinear portion 7D has the same curvilinear shape but smaller dimensions.

The above described form of the heating tube 4 with five rectilinear parts 4A-4D connected at their end by connecting portions 7A-7D and with one inlet portion 5 provided at one side 10 of the heating body 2 and an outlet portion 6 provided at the other side 9 of the body 2 allows to obtain an optimal heat exchange and a heating device 1 which has reduced length K **(****Figure 1****)** and dimensions similar to that of conventional aluminium heating devices (thermo-blocks) used in beverage preparation machines.

Preferably the heating tube 4 is made of stainless steel, has an inner diameter comprised between 2,2 mm and 2,3 mm, more preferably about 2,6 mm, and a thickness comprised between 1 mm and 1,5 mm.

Preferably, according to the invention, the electrical resistors 3A-3H are rectilinear elements extending from one side wall 9 of the body 2 to the other side wall 10.

The electrical resistors 3A-3H have connecting portions 15 **(****Figures 1****,** **2****,** **4****)** projecting outside from the side walls 9, 10 of the body 2, for connecting the resistors 3A-3H to conventional electrical power supply cables (not shown).

Preferably, according to the invention, the heating device 1 comprises at least eight electrical resistors 3A-3H:
- four outermost resistors 3A-3D are positioned symmetrical to each other, with two resistors 3A, 3C positioned along the axis X of the first pair of orthogonal axes X, Y (mentioned above), and two other resistors 3B, 3D positioned along the axis Y, all at the same distance D9-D12 from the centre C1 of these axes X, Y,
- four innermost resistors 3E-3H are positioned symmetrical to each other, with two resistors 3F-3H positioned along an axis X' of a second pair of orthogonal axes X', Y', and two other resistors 3E, 3G positioned along an axis Y', all at the same distance D13-D16 from the centre C1 of these axes X', Y',
wherein the second pair of orthogonal axes X', Y' is concentric with the first pair of orthogonal axes X, Y and is rotated with respect to the first pair of orthogonal axes X, Y of 45° clock wise.

Preferably, as shown in **Figure 3****,** the four outermost resistors 3A-3D are positioned more closely to the outer wall 2A of the body 2 than the four outermost parts 4B-4E of the heating tube 4. Therefore, the distances D9-D12 of the four outermost resistors 3A-3D are greater than the distances D1-D4 of the four outermost parts 4B-4E with respect to the common centre C1 of the axes X, Y.

Preferably, as shown in **Figure 3****,** the four innermost resistors 3E-3H are positioned more closely to the longitudinal axis L of the body 2, than the other resistors 3A-3D.

Preferably, the four innermost resistors 3E-3H are positioned at a distance D13-D16 that is less than the distance D1-D4 of the four outermost parts 4B-4E of the heating tube 4, with respect to the axes X, Y and X', Y'.

Preferably, according to the invention the electrical resistors 3A-3H are all the same and they are conventional metal wire for example of the type used in coils, and preferably made of copper.

Preferably the resistors 3A-3H have a total heating power in a range of 1100-1700W and more preferably about 1500W.

The range of the power density of the resistors (enabling a quick increase of the temperature of the water, for example from room temperature to around 85-95°C) is for example between 30 and 70 Watt/cm2.

According to an alternative embodiment (not shown), the number of the electrical resistors may be different as long as they are able to heat all the five rectilinear parts 4A-4D of the heating tube 4. According to the invention, at least two distinct electrical resistors are needed to achieve the requested heating performance of the water flowing in the tube.

In an alternative embodiment, not shown in the attached figures, the electrical resistor is at least partially wound around the heating tube or at least a portion of this heating tube.

Preferably the maximum pressure of the water inflow is comprised between 6 and 9 bars, and more preferably about 8 bars, and the flow rate of the water inflow is comprised between 250 and 300 mm3/minute, and more preferably about 200 mm3/minute.

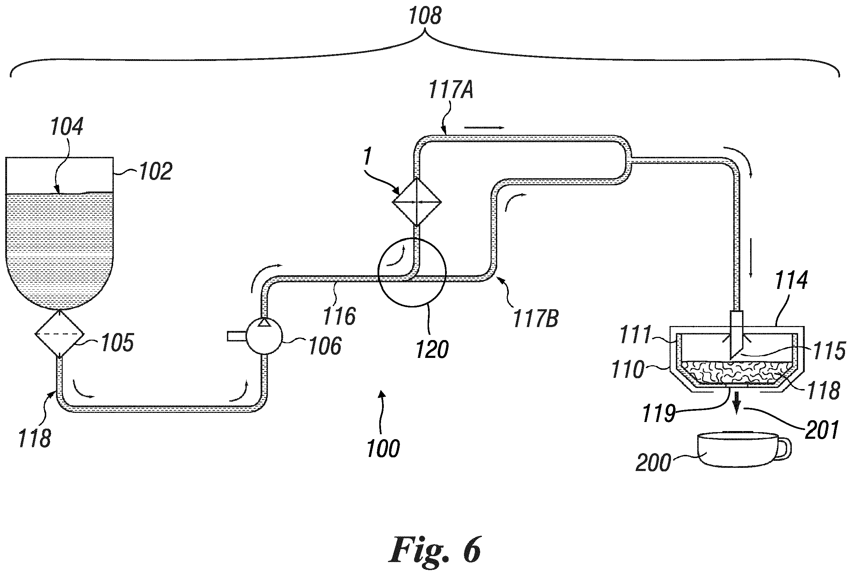

A preferred embodiment of a beverage preparation machine is schematically shown in **Figure 6****.** This beverage preparation machine 100 comprises a water circuit 108 including a water tank 102, in which a volume of water 104 is kept, as well as a filter 105, a pump 106 and a heating device 1 according to the invention described above. As usual for the skilled in the art, the pump 106 is able to deliver a maximum output pressure comprised for example between 13 and 15 bar (pressure relative to the atmospheric pressure). The beverage preparation machine 100 also preferably comprises an ingredient package holder 110, depicted here in the closed position. The ingredient package is here, by way of non-limiting example, a beverage capsule (not depicted) which is held into the beverage capsule holder 110. The capsule holder 110 holds the beverage capsule 111 in a depression provided for that purpose, for instance of the type described in Applicant's European patent No. EP 1472156 B1. The beverage capsule is, for example, a generally hollow, cylindrical or frusto-conical container holding a portion of a beverage ingredient or ingredients sufficient for a single serving of beverage. Such beverage ingredients may include soluble ingredients such as powdered coffee, milk powder, sugar, or powdered cocoa; insoluble ingredients such as ground coffee or dried tea leaves; or other such ingredients or combinations of ingredients which produce a liquid alimentary product when reconstituted.

As usual for the skilled person, once a beverage capsule is inserted into the capsule holder 110, the capsule holder 110 is slid into place in the machine and a plate 114 comprising a hollow injection needle 115, is closed above the capsule and injects the water needed for the preparation of the beverage.

The functioning of this type of beverage preparation machine is well known to the skilled person and will not be described in detail.

During the preparation of a hot beverage, the water 104 that is drawn from the reservoir 102 is pressurized by the pump 106, then passed through the heating device 1 and the hot water line 117A, to the hollow injection needle 115. The flow of water exits the hollow injection needle 115, mixing with the beverage ingredient 118 which is disposed within the cavity of the beverage capsule 111. The resulting beverage 201 then drains from the beverage capsule through a drain hole 119 and into the container 200 - for instance a cup - for consumption.

For the preparation of a cold beverage the water is drawn from the water tank (at ambient temperature) and flows directly through the pump 106 to the injection needle 115 through a cold-water line 117B. The selection between "cold" and "hot" water is performed by activating a selection valve 120. An example of the general configuration and principle of operation of the beverage preparation machine 100 in general, and in particular of the loading of a beverage capsule into the capsule holder 110, and of the correct sealing of the beverage preparation machine 100 with the beverage capsule, is described in Applicant's European patent EP 1967099 B1.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications be covered by the appended claims.

## Claims

1. An electrical heating device (1) for use in a beverage preparation machine comprising:
- a body (2) having a longitudinal axis (L), wherein said body (2) comprises:
- at least a heating tube (4) at least partially embedded in said body (2), wherein a fluid to be heated flows in said heating tube (4), said heating tube (4) comprising an inlet portion (5) and an outlet portion (6) for said fluid,
- at least one electrical resistor (3A-3H) at least partially embedded in said body (2), for heating the fluid flowing in said heating tube (4);
wherein said body (2) comprises an oxide ceramic material, in particular an oxide ceramic material comprising MgO, for transferring the thermal energy of said electrical resistors (3A-3H) to said heating tube (4),
**characterized in that** the heating tube (4) comprises at least five parts (4A-4D) that extend inside said body (2), wherein said at least five parts (4A-4D) comprise:
- a central part (4A), which extends substantially coaxially to said longitudinal axis (L), and
- four outermost parts (4B-4D) extending substantially symmetric and parallel to said longitudinal axis (L),
wherein said five parts (4A-4D) are connected in series with each other to form a single heating tube (4).

2. An electrical heating device (1) according to claim 1, **characterized in that** the five parts (4A-4D) of the heating tube (4) are connected in series by four connecting portions (7A-7D), provided at ends portions (9, 10) of said body (2).

3. An electrical heating device (1) according to claim 2, **characterized in that** the four connecting portions (7A-7D) are provided outside the body (2).

4. An electrical heating device (1) according to any claims 1 to 3, **characterized in that** the body (2) comprises an external hollow tube (8), housing said five parts (4A-4D) of the heating tube (4) and said at last one electrical resistor (3A-3H), and that the space between the inner surface of the hollow tube (8) and the parts (4A-4D) of the heating tube (4) and the electrical resistors (3A-3H) is at least partially filled with said oxide ceramic material, in particular an oxide ceramic material comprising MgO preferably in powder form or in an extruded form.

5. An electrical heating device (1) according to claim 4, **characterized in that** the hollow tube (8) is closed at its ends by side walls (9, 10) each having seats (9A-9C, 10A-10C) for end portions of the parts (4A-4D) of the heating tube (4) and seats (9D-9E, 10D-10E) for end portions of said at least one electrical resistor (3A-3H), said seats being shaped, dimensioned and positioned so that they support and position the parts (4A-4D) of the heating tube (4) and the electrical resistor (3A-3H) at fixed distances (D1-D16) between each other.

6. An electrical heating device (1) according to any of the preceding claims, **characterized in that** the four outermost parts (4B-4D) of the heating tube (4) are positioned symmetrical to each other and to the central part (4A) and at the same distance (D1-D4), with respect to said central part (4A) and at the same distance (D5-D8) to the centres (C2-C5) of each other, and that preferably the four outermost parts (4B-4D) of the heating tube (4) are positioned more closely to the outer wall (2A) of the body (2) than to the longitudinal axis (L) of said body (2), such that said distance (D1-D4) with respect to said central part (4A) is greater than a quarter of the diameter (G) of the body (2).

7. An electrical heating device (1) according to any of the preceding claims, **characterized in that**, considering a cross section of the body (2), it comprises a first and a second symmetry axes (X, Y) of a first pair of orthogonal axes, perpendicular with each other, with their intersection point positioned along the longitudinal axis (L) of the body (2), the centres (C3, C5) of two (4C, 4E) of the four outermost tubular parts (4B-4D) of the heating tube (4) being positioned along said first axis (X), the centres (C2, C4) of the two other (4B, 4D) outermost tubular parts being positioned along the other axis (Y) of said first pair of orthogonal axes, and the centre (C1) of the of the central part (4A) being positioned at the intersection point of this first pair of orthogonal axes.

8. An electrical heating device (1) according to any of the preceding claims, **characterized by** comprising a plurality of distinct electrical resistors (3A-3H) at least partially embedded in said body (2), wherein said electrical resistors (3A-3H) are rectilinear elements extending substantially from one end portion (9) of the body (2) to the other end portion (10), and preferably comprising connecting portions (15) projecting outside from said end portions (9, 10) of the body (2) for connecting the electrical resistors (3A-3H) to conventional electrical power supply cables.

9. An electrical heating device (1) according to any of the preceding claims, **characterized in that**, considering a cross section of the body (2), it comprises a first and a second axes (X, Y) of a first pair of orthogonal axes, perpendicular with each other, with their intersection point positioned along the longitudinal axis (L) of the body (2),
and by comprising at least eight electrical resistors (3A-3H):
- wherein four outermost electrical resistors (3A-3D) are positioned symmetrical to each other, with two outermost electrical resistors (3A-3C) positioned along an axis (X) of said first pair of orthogonal axes (X, Y), and two other outermost electrical resistors are positioned along the other axis (Y), all at the same distance (D9-D12) from the centre (C1) of this first pair of orthogonal axes (X, Y),
- wherein four innermost electrical resistors (3E-3H) are positioned symmetrical to each other, with two innermost electrical resistors (3F, 3H) positioned along an axis (X') of a second pair of orthogonal axes (X', Y'), and two other innermost electrical resistors (3E, 3G) are positioned along the other axis (Y') of this second pair of orthogonal axes (X', Y'), all at the same distance (D13-D16) from the centre (C1) of this second orthogonal axes (X', Y'), wherein the second pair of orthogonal axes (X', Y') is concentric with the first pair of orthogonal axes (X, Y) and is rotated with respect to said first pair of orthogonal axes (X, Y) of 45° clock wise.

10. An electrical heating device (1) according to any of the preceding claims, **characterized by** comprising at least eight electrical resistors (3A-3H):
- wherein four outermost electrical resistors (3A-3D) are positioned more closely to the outer wall (2A) of the body (2) than the four outermost parts (4B-4E) of the heating tube (4), such that the distances (D9-D12) of the four outermost electrical resistors (3A-3D) with respect to the longitudinal axis (L) of the body (2) is greater than the distance (D1-D4) of the four outermost parts (4B-4E) with respect to said longitudinal axis (L);
- and wherein four innermost electrical resistors (3E-3H) are positioned more closely to the longitudinal axis (L) of the body (2), than to the other electrical resistors (3A-3D), and preferably said four innermost electrical resistors (3E-3H) are positioned at a distance (D13-D16) with respect to the longitudinal axis (L) of the body (2) that is less than the distance (D1-D4) of the four outermost parts (4B-4E) of the heating tube (4) with respect to the same longitudinal axis (L) of the body (2).

11. A beverage preparation machine (100) comprising a water circuit (108) including: a water tank (102), a pump (106), a heating device (1) and an ingredient package holder (110), wherein during the preparation of a hot beverage, water (104) that is drawn from the reservoir (102) is pressurized by the pump (106), then passed through the heating device (1) and is fed through a hot water line (117A), to said ingredient package for preparing the beverage, **characterized in that** said heating device (1) comprise the features according to one or more of the claims 1-10.
